Europäisches Patentamt

European Patent Office

Office européen des brevets

(19)

(11) **EP 1 469 292 A1**

(12) **EUROPEAN PATENT APPLICATION**

(43) Date of publication:
20.10.2004 Bulletin 2004/43

(51) Int Cl.$^7$: **G01K 11/00**, G02F 1/01,
G02B 6/35

(21) Application number: 04251619.5

(22) Date of filing: 22.03.2004

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK** | (71) Applicant: **ALPS ELECTRIC CO., LTD.**<br>**Ota-ku Tokyo 145 (JP)** |
| (30) Priority: **17.04.2003 JP 2003113021**<br>**30.04.2003 JP 2003125352** | (72) Inventor: **Kitagawa, Hitoshi**<br>**Tokyo 145 (JP)**<br><br>(74) Representative: **Kensett, John Hinton**<br>**Saunders & Dolleymore,**<br>**9 Rickmansworth Road**<br>**Watford, Hertfordshire WD18 0JU (GB)** |

(54) **Mach-zehnder interferometer optical switch and mach-zehnder interferometer temperature sensor**

(57)     A Mach-Zehnder interferometer optical switch and a Mach-Zehnder interferometer temperature sensor include two optical waveguides (A, B) having refractive index temperature coefficients with opposite signs, the two optical waveguides being in the vicinity of each other at two locations such that two directional couplers (13a, 13b) are provided at the two locations and including respective optical waveguide arms (a, b) between the two directional couplers.

FIG. 1

EP 1 469 292 A1

**Description**

BACKGROUND OF THE INVENTION

1. Field of the Invention

The present invention relates to a Mach-Zehnder interferometer (MZI) optical switch which is used in optical communication.

In addition, the present invention also relates to a Mach-Zehnder interferometer (MZI) temperature sensor which is suitable for use in remote temperature monitoring.

2. Description of the Related Art

An MZI optical switch shown in Fig. 17 is disclosed in, for example, Japanese Unexamined Patent Application Publication No. 2000-29079.

This MZI optical switch includes two silica optical waveguides 84 and 84 which is formed in a clad layer laminated on a silicon substrate. The two silica optical waveguides 84 and 84 are in the vicinity of each other at two locations so that two 3-dB directional couplers 93 and 93 are provided, and include their respective optical waveguide arms 84a and 84b which each connects the two directional couplers 93 and 93. In addition, the MZI optical switch also includes a Cr thin-film heater 85 provided on the surface of the clad layer. The thin-film heater 85 causes a thermo-optic effect in the optical waveguide arm 84a, and thereby shifts the phase of transmitted light. Au-wires 85a and 85b are connected to the thin-film heater (electrode) 85 at both ends thereof.

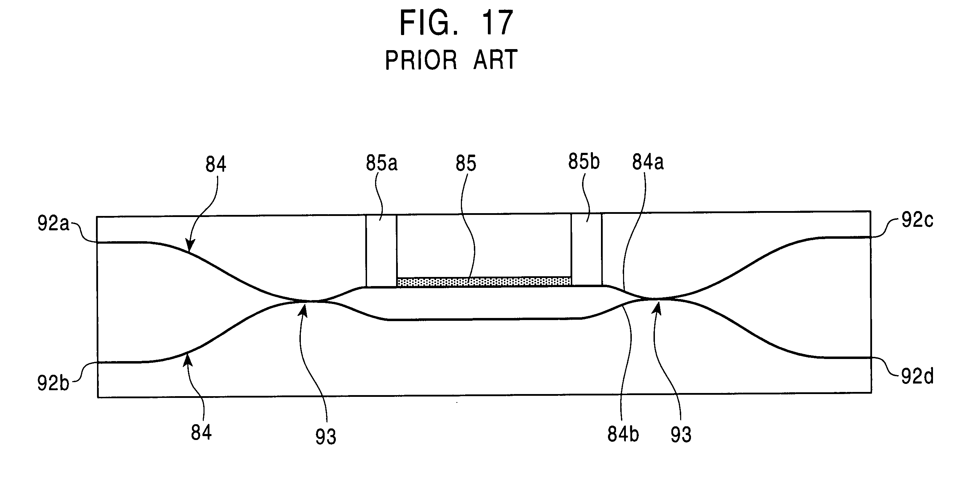

In the MZI optical switch shown in Fig. 17, when no voltage is applied to the thin-film heater 85, the optical path lengths of the two optical waveguide arms 84a and 84b are the same. Accordingly, light which enters one of the optical waveguides 84 and 84 at one end (through a first input port 92a) is output from the other optical waveguide 84 at the other end (through a second output port 92d).

When the thin-film heater 85 is heated by applying a voltage, the temperature of the optical waveguide arm 84a of one of the optical waveguides 84 and 84 increases and the optical path lengths of the two optical waveguide arms 84a and 84b become different from each other. Therefore, light which enters one of the optical waveguides 84 and 84 through the first input port 92a is output from the same optical waveguide 84 at the other end thereof (through a first output port 92c). Accordingly, the output port through which the light is output is switched from the second output port 92d, which is used in the switch-off state (when no voltage is applied to the electrode), to the first output port 92c, and optical switching is achieved.

In the MZI optical switch shown in Fig. 17, a phase shift occurs only in the optical waveguide arm 84a since only the optical waveguide arm 84a is heated. Therefore, the temperature at which the phase is shifted by the amount required to achieve switching is high and the power consumption is large. In addition, it takes a long time to increase the temperature, and therefore the switching time is long. When, for example, the length of the thin-film heater 85 is 1 cm and the wavelength of incident light is 1.55 $\mu$m, the temperature of the optical waveguide arm 84a must be increased by 7.5°C to shift the phase of transmitted light by $\pi$ and switch the output port.

In order to solve this problem, an MZI optical switch shown in Fig. 18 is also disclosed in the Japanese Unexamined Patent Application Publication No. 2000-29079. Also in the MZI optical switch shown in Fig. 18, a Cr thin-film heater (electrode) 95 is provided on the surface of a clad layer and Au-wires 95a and 95b are connected to the thin-film heater 95 at both ends thereof. The thin-film heater 95 causes the thermo-optic effect in both of two optical waveguide arms 84a and 84b to shift the phase of transmitted light. In addition, grooves 86 which sever the optical waveguide arms 84a and 84b are formed along the optical waveguide arms 84a and 84b, and the grooves 86 are filled with a silicone resin, which is an organic material whose thermo-optic coefficient is larger than that of the optical waveguide arms 84a and 84b in which the thermo-optic effect occurs.

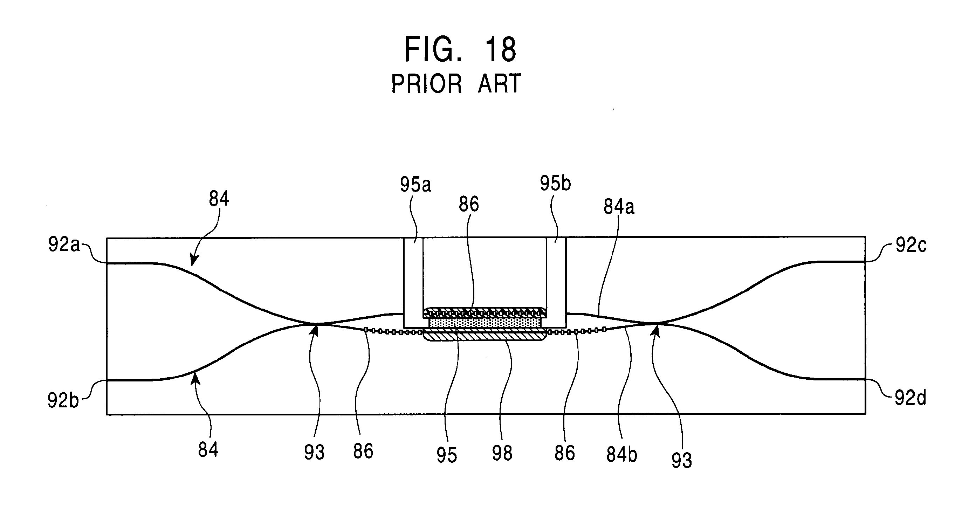

In the MZI optical switch shown in Fig. 18, when no voltage is applied to the thin-film heater 95, the total optical path lengths of the two optical waveguide arms 84a and 84b are designed to be the same. Accordingly, light which is input to a first input port 92a is output from a second output port 92d.

When the thin-film heater 95 is heated by applying a voltage, the temperature in the hatched region 98 in Fig. 18 increases. At this time, since the optical waveguide arms 84a and 84b are symmetric to each other in the regions free from the grooves 86, the optical path lengths of the optical waveguide arms 84a and 84b are maintained the same in these regions. However, the optical path lengths of the two optical waveguide arms 84a and 84b become different from each other in the region 98 where the temperature is increased by the thin-film heater 95 since the grooves 86 are formed only in the optical waveguide arm 84a and the thermo-optic coefficient of the silicone resin filling the grooves 86 is larger than that of silica glass. Accordingly, the phase of the transmitted light can be shifted by $\pi$ and the output port from which the light input to the first input port 92a is output can be switched to a first output port 92c at a temperature lower than that in the MZI optical switch shown in Fig. 17.

Although the power consumption of the MZI optical switch shown in Fig. 18 is lower than that of the MZI optical switch shown in Fig. 17, the MZI optical switch shown in Fig. 18 has a problem in that its structure and manufacturing processes are complex since the grooves 86 filled with an organic material must be formed. In addition, optical communication systems have recently become increasingly popular, and there is a demand for MZI optical switches with lower power consumption and shorter switching time than those of the MZI optical switch shown in Fig. 18.

Next, an MZI temperature sensor shown in Fig. 19 is disclosed in, for example, Japanese Unexamined Patent Application Publication No. 7-181087.

This MZI temperature sensor includes a silica optical waveguide 84 which is formed in a clad layer laminated on a silicon substrate and which is divided into a plurality of optical waveguide lines. In addition, a plurality of Mach-Zehnder optical waveguide units 90 are provided in the MZI temperature sensor, each Mach-Zehnder optical waveguide unit having two of the optical waveguide lines which are in the vicinity of each other.

Each Mach-Zehnder optical waveguide unit 90 has two optical waveguide arms 84a and 84b, and the physical path length of the optical waveguide arm 84b is longer than the physical path length L of the optical waveguide arm 84a by $\Delta$L.

In this MZI temperature sensor, light 101 which enters the optical waveguide 84 at one end thereof (through a first input port 92a) is output from the other end of the optical waveguide 84 (through a second output port 92d). However, since the physical path lengths of the two optical waveguide arms 84a and 84b are different from each other as described above, the intensity of light output from the second output port 92d varies along with the temperature. More specifically, since the physical path lengths of the two optical waveguide arms 84a and 84b are different from each other (the signs of the refractive index temperature coefficients are the same), the phase difference between the light waves to be combined varies along with the ambient temperature. Accordingly, the intensity of output light 103 varies along with the temperature. The intensity of the output light varies periodically with respect to the temperature, and since the temperature and the light intensity are in one-to-one correspondence in each period, the temperature can be determined on the basis of the light intensity.

In this MZI temperature sensor, the difference $\Delta$L between the physical path lengths of the two optical waveguide arms 84a and 84b, which are composed of the same material, is small relative to the physical path length L of the optical waveguide arm 84a. Therefore, the phase shift required to detect the temperature change cannot be obtained unless the temperature increases by a relatively large amount, and the temperature sensitivity is relatively low. The reason why the difference $\Delta$L between the physical path lengths of the two optical waveguide arms 84a and 84b, which are composed of the same material, is small is because the size of the sensor increases along with the difference $\Delta$L between the physical path lengths of the two optical waveguide arms 84a and 84b. Although the difference $\Delta$L can be increased and the size of the sensor can be reduced at the same time by increasing the bending angle (reducing the radius of curvature) of the optical waveguide arm 84b, a problem of optical loss occurs in such a case.

SUMMARY OF THE INVENTION

In view of the above-described situation, an object of the present invention is to provide an MZI optical switch with a simple structure, low power consumption, and short switching time.

Another object of the present invention is to provide a high-sensitivity MZI temperature sensor in which the phase shift required to detect the temperature change can be obtained even when the temperature change is small.

In addition, another object of the present invention is to provide a small, high-sensitivity MZI temperature sensor in which the phase shift required to detect the temperature change can be obtained even when the temperature change is small.

An Mach-Zehnder interferometer (MZI) optical switch according to the present invention includes two optical waveguides having refractive index temperature coefficients with opposite signs, the two optical waveguides being in the vicinity of each other at two locations such that two directional couplers are provided at the two locations and including respective optical waveguide arms between the two directional couplers. In addition, the MZI optical switch also includes a heater which heats at least one of the two optical waveguide arms.

In the MZI optical switch according to the present invention, the refractive index temperature coefficients of the two optical waveguides have opposite signs. Therefore, the difference between the optical path lengths of the two optical waveguide arms and the phase shift of the transmitted light obtained when the optical waveguide arms are heated are larger than those obtained in the known MZI optical switch, which includes two optical waveguides composed of the same material (in other words, two optical waveguides whose refractive index temperature coefficients are the same), if the same temperature change is caused.

In addition, in the MZI optical switch according to the present invention, the phase of the transmitted light can be shifted by the amount required to achieve switching at a lower temperature compared to the known MZI optical switch in which the two optical waveguides are composed of the same material. Thus, the power consumption and the time required to increase the temperature are reduced, and the switching time is reduced accordingly. In addition, in the MZI optical switch according to the present invention, the two optical waveguides are simply composed of materials whose refractive index temperature coefficients have opposite signs. Accordingly, compared to the known MZI optical switch in which the grooves filed with an organic material are formed along the optical waveguide arms, the structure and the manufacturing processes are simpler.

In the MZI optical switch according to the present invention, the heater may heat both of the two optical waveguide arms. In such a case, compared to the case in which only one of the optical waveguide arms is heated, the difference between the optical path lengths of the two optical waveguide arms increases, and the phase shift of the transmitted light increases accordingly. Therefore, compared to the case in which only one of the optical waveguide arms is heated, the phase of the transmitted light can be shifted by the amount required to achieve switching at a lower temperature. As a result, the required temperature increase can be achieved in a shorter time and the switching time is reduced.

In addition, since both of the two optical waveguide arms are heated in this MZI optical switch, it is not necessary to provide a thermal insulator between the two optical waveguide arms, and the structure and the manufacturing processes are simple. In addition, the two optical waveguide arms can be arranged near each other, and therefore the bending angle can be reduced. Accordingly, the optical loss and the size of the MZI optical switch can be reduced.

In the MZI optical switch according to the present invention, one of the two optical waveguides may be composed of a first material selected from the group consisting of $TiO_2$, $PbMoO_4$, and $Ta_2O_5$, the first material having a negative refractive index temperature coefficient, and the other optical waveguide may be composed of a second material selected from the group consisting of $LiNbO_3$, lead lanthanum zirconate titanate (PLZT), and $SiO_xN_y$, the second material having a positive refractive index temperature coefficient. In particular, when one of the optical waveguides is composed of $TiO_2$ and the other optical waveguide is composed of PLZT, the difference between the refractive index temperature coefficients is considerably large. Therefore, the difference between the optical path lengths of the two optical waveguide arms and the phase shift of the transmitted light greatly increase when the optical waveguide arms are heated.

In the MZI optical switch according to the present invention, $\delta/\kappa \leq 0.2$ ($\delta$ is one-half of the difference between the transmission coefficients of the two optical waveguides and $\kappa$ is the coupling coefficient) is preferably satisfied in view of increasing the extinction ratio. More preferably, $\delta/\kappa \leq 0.1$ is satisfied, and an extinction ratio of 30 dB or more can be obtained in such a case. The relationship defined by $\delta/\kappa \leq 0.2$ can be satisfied by reducing $\delta$ or increasing $\kappa$. $\delta$ can be reduced by changing the cross sectional shapes of the optical waveguides, and $\kappa$ can be increased by reducing the distance between the optical waveguides in the directional couplers.

In the MZI optical switch according to the present invention, preferably, the physical lengths of the two optical waveguides are different from each other and are set such that the effective optical path lengths of the two optical waveguides for light with a predetermined wavelength are the same in the region between the directional couplers. In such a case, switching offset can be prevented.

More specifically, when the refractive index temperature coefficients of the two optical waveguides have opposite signs, there may be a case in which the transmission coefficients of the two optical waveguides are different form each other by a large amount. In such a case, if the effective optical wavelengths of the optical waveguide arms are different from each other, the signal light (incident light) cannot travel through the optical waveguide arms in a similar manner and switching offset occurs. Therefore, the physical length of one of the two optical waveguide arms is set longer than that of the other optical waveguide arm in accordance with the difference between the transmission coefficients of the two optical waveguides such that the effective optical path lengths of the two optical waveguides for the incident light with the predetermined wavelength are the same in the region between the directional couplers. Accordingly, the switching offset can be prevented.

A Mach-Zehnder interferometer (MZI) temperature sensor according to the present invention includes two optical waveguides having refractive index temperature coefficients with opposite signs, the two optical waveguides being in the vicinity of each other at two locations such that two directional couplers are provided at the two locations and including respective optical waveguide arms between the two directional couplers.

In the MZI temperature sensor according to the present invention, the refractive index temperature coefficients of the two optical waveguides have opposite signs. Therefore, the difference between the effective optical path lengths of the two optical waveguide arms and the phase shift of the transmitted light obtained when a temperature change occurs are larger than those obtained in the known MZI temperature sensor, which includes two optical waveguides composed of the same material (in other words, two optical waveguides whose refractive index temperature coefficients are the same), if the physical conditions (particularly the difference between the physical lengths of the two optical wavelengths) are the same.

In addition, in the MZI temperature sensor according to the present invention, the phase of the transmitted light can be shifter by the amount required to detect the temperature change even when the temperature change is small. Accordingly, the temperature sensitivity is higher than that of the known MZI temperature sensor in which the two optical waveguides are composed of the same material.

In addition, in the MZI temperature sensor according to the present invention, the two optical waveguides are simply composed of materials whose refractive index temperature coefficients have opposite signs. Therefore, the structure and the manufacturing processes are simple. Accordingly, the MZI temperature sensor according to the present invention is suitable for mass production.

In addition, the MZI temperature sensor according to the present invention is suitable for remote temperature monitoring.

In the MZI temperature sensor according to the present invention, the refractive index temperature coefficients of the two optical waveguides have opposite signs. Therefore, the wavelength arms may have the same physical lengths. Accordingly, the difference between the effective optical path lengths of the two optical waveguide arms is larger than that in the known MZI temperature sensor in which the two optical waveguides are composed of the same material.

In the MZI temperature sensor according to the present invention, the two optical waveguide arms may have the same physical length as described above. Therefore, compared to the case in which the two optical waveguide arms have different physical lengths, the two optical waveguide arms may be arranged nearer and the bending angle can be reduced (the radius of curvature can be increased). Accordingly, the optical loss can be reduced and the offset can be prevented. In addition, the size of the MZI temperature sensor can be reduced. Since the size of the MZI temperature sensor according to the present invention can be reduced, it is suitable for remote temperature monitoring.

In the MZI temperature sensor according to the present invention, $\delta/\kappa \leq 0.2$ ($\delta$ is one-half of the difference in transmission coefficients of the two optical waveguides and $\kappa$ is the coupling coefficient) is preferably satisfied in view of increasing the extinction ratio and the temperature resolution. More preferably, $\delta/\kappa \leq 0.1$ is satisfied, and an extinction ratio of 30 dB or more can be obtained in such a case. The relationship defined by $\delta/\kappa \leq 0.2$ can be satisfied by reducing $\delta$ or increasing $\kappa$. $\delta$ can be reduced by changing the cross sectional shapes of the optical waveguides, and $\kappa$ can be increased by reducing the distance between the optical waveguides in the directional couplers.

In the MZI temperature sensor according to the present invention, one of the two optical waveguides may be composed of a first material selected from the group consisting of $TiO_2$, $PbMoO_4$, and $Ta_2O_5$, the first material having a negative refractive index temperature coefficient, and the other optical waveguide may be composed of a second material selected from the group consisting of $LiNbO_3$, lead lanthanum zirconate titanate (PLZT), and $SiO_xN_y$, the second material having a positive refractive index temperature coefficient. In particular, when one of the optical waveguides is composed of $TiO_2$ and the other optical waveguide is composed of PLZT, the difference between the refractive index temperature coefficients is considerably large. Therefore, the difference between the optical path lengths of the two optical waveguide arms and the phase shift of the transmitted light greatly increase when a temperature change occurs.

Embodiments of the present invention will now be described, by way of example, with reference to the accompanying diagrammatic drawings, in which:

Fig. 1 is a schematic plan view showing the construction of an MZI optical switch according to a first embodiment of the present invention;

Fig. 2 is a sectional view of Fig. 1 cut along line II-II;

Fig. 3 is a sectional view of Fig. 1 cut along line III-III;

Fig. 4 is a schematic plan view showing the construction of an MZI optical switch according to a second embodiment of the present invention;

Fig. 5 is a graph showing the relationship between the phase shift and the relative output light intensity in an MZI optical switch in which $\delta/\kappa = 0.01$;

Fig. 6 is a graph showing the relationship between the phase shift and the relative output light intensity in an MZI optical switch in which $\delta/\kappa = 0.1$;

Fig. 7 is a graph showing the relationship between the phase shift and the relative output light intensity in an MZI optical switch in which $\delta/\kappa = 0.2$;

Fig. 8 is a graph showing the relationship between the phase shift and the relative output light intensity in an MZI optical switch in which $\delta/\kappa = 0.5$;

Fig. 9 is a schematic plan view showing the construction of an MZI temperature sensor according to a third embodiment of the present invention;

Fig. 10 is a sectional view of Fig. 9 cut along line X-X;

Fig. 11 is a sectional view of Fig. 9 cut along line XI-XI;

Fig. 12 is a schematic plan view showing the construction of an MZI temperature sensor according to a fourth embodiment of the present invention;

Fig. 13 is a graph showing the relationship between the phase shift and the relative output light intensity in an MZI temperature sensor in which $\delta/\kappa = 0.01$;

Fig. 14 is a graph showing the relationship between the phase shift and the relative output light intensity in an MZI temperature sensor in which $\delta/\kappa = 0.1$;

Fig. 15 is a graph showing the relationship between the phase shift and the relative output light intensity in an MZI temperature sensor in which $\delta/\kappa = 0.2$;

Fig. 16 is a graph showing the relationship between the phase shift and the relative output light intensity in an MZI temperature sensor in which $\delta/\kappa = 0.5$;

Fig. 17 is a schematic plan view showing a known MZI optical switch;

Fig. 18 is a schematic plan view showing another known MZI optical switch; and

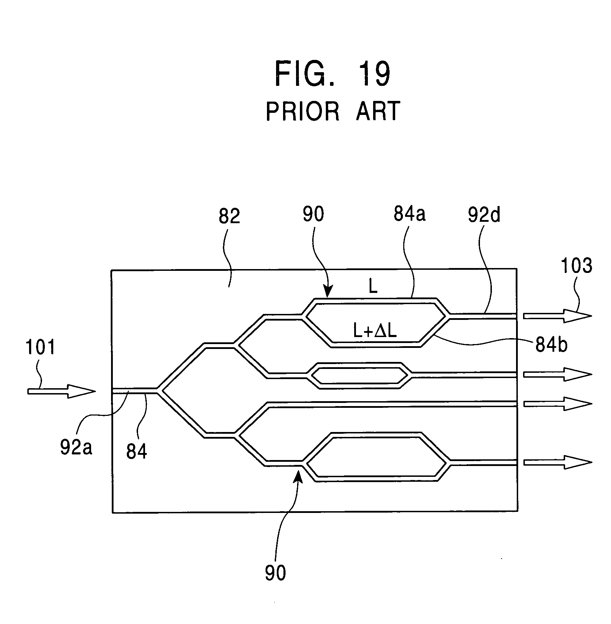

Fig. 19 is a schematic plan view showing a known MZI temperature sensor.

DESCRIPTION OF THE PREFERRED EMBODIMENTS

Embodiments of the present invention will be described in detail below with reference to the accompanying drawings.

(First Embodiment)

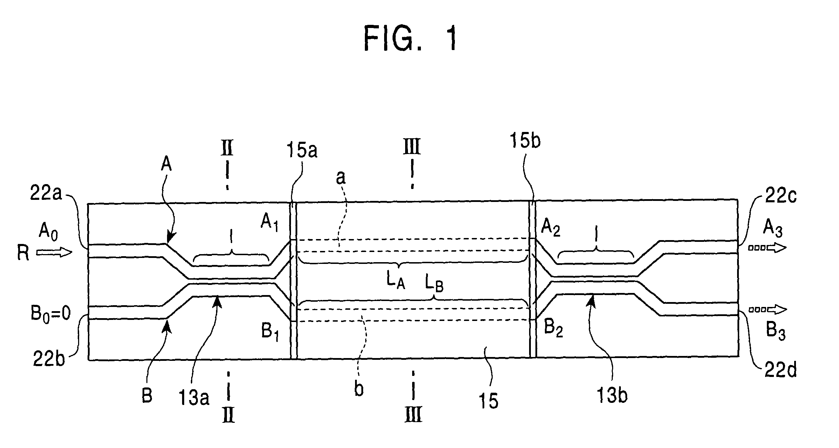

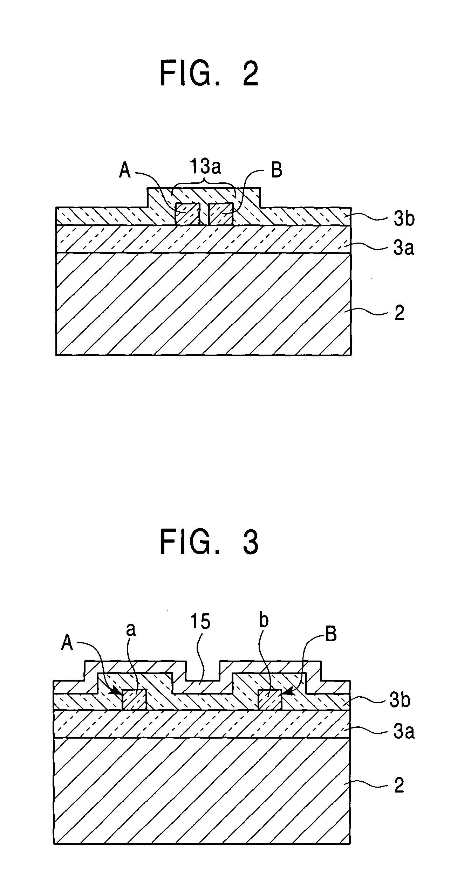

Fig. 1 is a schematic plan view showing the construction of an MZI optical switch according to a first embodiment of the present invention. In addition, Fig. 2 is a sectional view of Fig. 1 cut along line II-II, and Fig. 3 is a sectional view of Fig. 1 cut along line III-III.

As shown in Figs. 1 to 3, an MZI optical switch according to the present embodiment includes a lower clad layer 3a laminated on a substrate 2 composed of silicon or the like; two optical waveguides A and B formed on the surface of the lower clad layer 3a; an upper clad layer 3b laminated so as to cover the two optical waveguides A and B and the lower clad layer 3a; and a thin-film heater 15 composed of Cr or the like which is provided on the surface of the upper clad layer 3b.

The lower and upper clad layers 3a and 3b are composed of, for example, $SiO_2$, and the refractive index of the material of the lower and upper clad layers 3a and 3b is lower than that of the material of the optical waveguides A and B. In addition, the absolute value of the refractive index temperature coefficient of the material of the lower and upper clad layers 3a and 3b is also lower than that of the material of the optical waveguides A and B.

The two optical waveguides A and B on the surface of the lower clad layer 3a are in the vicinity of each other at two locations so that two 3-dB directional couplers 13a and 13b are provided, and include their respective optical waveguide arms a and b which each is placed between the two 3-dB directional couplers 13a and 13b. The refractive index temperature coefficients of the two optical waveguides A and B have opposite signs.

In the present embodiment, the optical waveguide A is composed of a material which satisfies Expression (1) shown below, that is, a material having a negative refractive index temperature coefficient. For example, the optical waveguide A is composed of one of $TiO_2$, $PbMoO_4$, and $Ta_2O_5$. In addition, the optical waveguide B is composed of a material which satisfies Expression (2) shown below, that is, a material having a positive refractive index temperature coefficient. For example, the optical waveguide B is composed of one of $LiNbO_3$, PLZT, and $SiO_xN_y$.

For the above-described reasons, preferably, the optical waveguide A is composed of $TiO_2$ and the optical waveguide B is composed of PLZT.

$$(\partial N/\partial T)_A < 0 \tag{1}$$

$$(\partial N/\partial T)_B > 0 \tag{2}$$

where N is the refractive index of the optical waveguides A and B and T is the temperature ($^\circ$C).

In the above-mentioned materials of which the optical waveguides A and B may be composed, the refractive index temperature coefficient of $TiO_2$ is $-7 \times 10^{-5} \,^\circ C^{-1}$, that of $PbMoO_4$ is $-4 \times 10^{-5} \,^\circ C^{-1}$, that of $Ta_2O_5$ is $-1 \times 10^{-5} \,^\circ C^{-1}$, that of $LiNbO_3$ is $4.0 \times 10^{-5} \,^\circ C^{-1}$, that of PLZT is $10 \times 10^{-5} \,^\circ C^{-1}$, and that of $SiO_xN_y$ is $1 \times 10^{-5} \,^\circ C^{-1}$.

The two optical waveguides A and B have the same physical length, and the two optical waveguide arms a and b also have the same physical length L.

The thin-film heater 15 heats at least one of the optical waveguide arms a and b to cause a thermo-optic effect, and thereby shifts the phase of transmitted light. In the present embodiment, the thin-film heater 15 is provided above the optical waveguide arms a and b with the upper clad layer 3b interposed therebetween, and therefore both of the optical waveguide arms a and b are heated. The thin-film heater (also referred to as an electrode) 15 is connected to metal wires 15a and 15b.

In the MZI optical switch according to the present embodiment, $\delta/\kappa \leq 0.2$ ($\delta$ is $(\beta_B - \beta_A)/2$ and $\kappa$ is the coupling coefficient, $\beta_A$ and $\beta_B$ being the transmission coefficients of the optical waveguides A and B, respectively) is preferably satisfied in view of increasing the extinction ratio. More preferably, $\delta/\kappa \leq 0.1$ is satisfied, and an extinction ratio of 30 dB or more can be obtained in such a case.

The relationship defined by $\delta/\kappa \leq 0.2$ can be satisfied by reducing $\delta$ or increasing $\kappa$. $\delta$ can be reduced by changing the cross sectional shapes of the optical waveguides A and B, and $\kappa$ can be increased by reducing the distance between the optical waveguides A and B in the directional couplers 13a and 13b.

Light with a wavelength of, for example, 1.3 µm or 1.55 µm, is caused to enter the optical waveguides of the above-described MZI optical switch.

Next, the operation of the MZI optical switch according to the present embodiment will be described below with reference to Fig. 1.

In Fig. 1, reference symbols $A_0$ to $A_3$ and $B_0$ to $B_3$ denote positions in the MZI optical switch. More specifically, $A_0$ denotes a position of a first input port 22a provided on one end of the optical waveguide A (position at which light enters the optical waveguide A), $A_1$ denotes a position on the optical waveguide A immediately behind the 3-dB directional coupler 13a which is near the first input port 22a, $A_2$ denotes a position on the optical waveguide A immediately in front of the 3-dB directional coupler 13b which is near the other end of the optical waveguide A, and $A_3$ denotes a position of a first output port 22c provided on the other end of the optical waveguide A.

In addition, $B_0$ denotes a position of a second input port 22b provided on one end of the optical waveguide B (position at which light enters the optical waveguide B), $B_1$ denotes a position on the optical waveguide B immediately behind the 3-dB directional coupler 13a which is near the second input port 22b, $B_2$ denotes a position on the optical waveguide B immediately in front of the 3-dB directional coupler 13b which is near the other end of the optical waveguide B, and $B_3$ denotes a position of a second output port 22d provided on the other end of the optical waveguide B.

When no voltage is applied to the thin-film heater 15, neither of the two optical waveguide arms a and b is heated. In this state, when, for example, light R with a wavelength of 1.55 µm is input to the first input port 22a, it is output from the second output port 22d. The powers $P_{A0}$ to $P_{A3}$ and $P_{B0}$ to $P_{B3}$ and the wave complex amplitudes $W_{A0}$ to $W_{A3}$ and $W_{B0}$ to $W_{B3}$ of the light R at positions $A_0$ to $A_3$ and $B_0$ to $B_3$, respectively, are shown below. The normal transmission phase shift is not included in the calculations. In this case, the coupling ratios of the 3-dB directional couplers 13a and 13b are both 0.5.

Wave Complex Amplitude at Position $A_0$:

$$W_{A0} = 1.0 \times e^{i \cdot \theta} = 1$$

Incident Light Power at Position $A_0$:

$$P_{A0} = |W_{A0}|^2 = 1$$

Wave Complex Amplitude at Position $B_0$:

$$W_{B0} = 0,$$

which means no light enters.
Incident Light Power at Position $B_0$:

$$P_{B0} = |W_{B0}|^2 = 0$$

Wave Complex Amplitude at Position $A_1$:

$$W_{A1} = (1/\sqrt{2}) \, W_{A0} = (1/\sqrt{2})$$

Transmitted Light Power at Position $A_1$:

$$P_{A1} = |W_{A1}|^2 = 1/2 \text{ (when 3-dB couplers are used)}$$

Wave Complex Amplitude at Position $B_1$:

$$W_{B1} = (1/\sqrt{2})W_{A0} \times e^{i \cdot (-\pi/2)} = (1/\sqrt{2}) \times e^{i \cdot (-\pi/2)}$$

Transmitted Light Power at Position $B_1$:

$$P_{B1} = |W_{B1}|^2 = 1/2$$

Wave Complex Amplitude at Position $A_2$:

$$W_{A2} = W_{A1} \times e^{i \cdot 0} = (1/\sqrt{2})$$

Transmitted Light Power at Position $A_2$:

$$P_{A2} = |W_{A2}|^2 = 1/2$$

Wave Complex Amplitude at Position $B_2$:

$$W_{B2} = W_{B1} \times e^{i \cdot 0} = (1/\sqrt{2}) \times e^{i \cdot (-\pi/2)}$$

Transmitted Light Power at Position $B_2$:

$$P_{B2} = |W_{B2}|^2 = 1/2$$

Wave Complex Amplitude at Position $A_3$:

$$\begin{aligned}
W_{A3} &= (1/\sqrt{2})W_{A2} + (1/\sqrt{2})W_{B2} \times e^{i \cdot (-\pi/2)} \\
&= 1/2 + (1/2) \times e^{i \cdot (-\pi)} = 1/2(1-1) \\
&= 0
\end{aligned}$$

Output Light Power at Position $A_3$:

$$P_{A3} = |W_{A3}|^2 = 0,$$

which means that the power of output light is 0 and no light is emitted at position $A_3$.

Wave Complex Amplitude at Position $B_3$:

$$W_{B3} = (1/\sqrt{2})W_{B2} + (1/\sqrt{2})W_{A2} \times e^{i \cdot (-\pi/2)}$$

$$= (1/2) \times e^{i \cdot (-\pi/2)} + (1/2) \times e^{i \cdot (-\pi/2)}$$

$$= e^{i \cdot (-\pi/2)}$$

Output Light Power at Position $B_3$:

$$P_{B3} = |W_{B3}|^2 = 1,$$

which means that the power of output light is 1.

When a voltage is applied to the thin-film heater 15, both of the two optical waveguide arms a and b are heated by the thin-film heater 15 and the temperature thereof increases. At this time, since the refractive index temperature coefficients of the two optical waveguide arms a and b have opposite signs as described above, the difference between the optical path lengths of the two optical waveguide arms a and b is larger than that in the known MZI optical switch in which the optical waveguides are composed of the same material, and the phase of the transmitted light can be shifted by $\pi$ at a lower temperature. Accordingly, if, for example, light R with a wavelength of 1.55 μm is input to the first input port 22a, it is output from the first output port 22c.

The powers $P_{A0}$ to $P_{A3}$ and $P_{B0}$ to $P_{B3}$ and the wave complex amplitudes $W_{A0}$ to $W_{A3}$ and $W_{B0}$ to $W_{B3}$ of the light R at positions $A_0$ to $A_3$ and $B_0$ to $B_3$, respectively, are shown below. The normal transmission phase shift is not included in the calculations. In this case, the coupling ratios of the 3-dB directional couplers 13a and 13b are both 0.5.

In this example, the case in which the optical waveguide arms a and b are heated until $\Delta\phi_{A,B} = \Delta\phi_B - \Delta\phi_A = \pi$ ($\Delta\phi_A$ is the phase difference of light which passes through the optical waveguide arm a being heated and $\Delta\phi_B$ is the phase difference of light which passes through the optical waveguide arm b being heated) is satisfied is considered. In addition, $L_A = L_B = L$ ($L_A$ is the physical length of a portion of the optical waveguide arm a which is covered by the thin-film heater 15, and $L_B$ is the physical length of a portion of the optical waveguide arm b which is covered by the thin-film heater 15) and $N_A \neq N_B$ ($N_A$ is the refractive index of the optical waveguide A and $N_B$ is the refractive index of the optical waveguide B) are satisfied.

Wave Complex Amplitude at Position $A_0$:

$$W_{A0} = 1.0 \times e^{i \cdot \theta} = 1$$

Incident Light Power at Position $A_0$:

$$P_{A0} = |W_{A0}|^2 = 1$$

Wave Complex Amplitude at Position $B_0$:

$$W_{B0} = 0,$$

which means no light enters.

Incident Light Power at Position $B_0$:

$$P_{B0} = |W_{B0}|^2 = 0$$

Wave Complex Amplitude at Position $A_1$:

$$W_{A1} = (1/\sqrt{2})W_{A0} = (1/\sqrt{2})$$

Transmitted Light Power at Position $A_1$:

$$P_{A1} = |W_{A1}|^2 = 1/2$$

(when 3-dB couplers are used)

Wave Complex Amplitude at Position $B_1$:

$$W_{B1} = (1/\sqrt{2})W_{A0} \times e^{i \cdot (-\pi/2)} = (1/\sqrt{2}) \times e^{i \cdot (-\pi/2)}$$

Transmitted Light Power at Position $B_1$:

$$P_{B1} = |W_{B1}|^2 = \tfrac{1}{2}$$

Wave Complex Amplitude at Position $A_2$:

$$W_{A2} = W_{A1} \times e^{i \cdot (\Delta\phi A)}$$
$$= (1/\sqrt{2}) \times e^{i \cdot (\Delta\phi A)}$$

Transmitted Light Power at Position $A_2$:

$$P_{A2} = |W_{A2}|^2 = \tfrac{1}{2}$$

Wave Complex Amplitude at Position $B_2$:

$$W_{B2} = W_{B1} \times e^{i \cdot (\Delta\phi B)}$$
$$= (1/\sqrt{2}) \times e^{i \cdot ((-\pi/2) + \Delta\phi B)}$$

Transmitted Light Power at Position $B_2$:

$$P_{B2} = |W_{B2}|^2 = 1/2$$

Wave Complex Amplitude at Position $A_3$:

$$W_{A3} = (1/\sqrt{2})W_{A2} + (1/\sqrt{2})W_{B2} \times e^{i \cdot (-\pi/2)}$$
$$= (1/2) \times e^{i \cdot (\Delta\phi A)} + (1/2)e^{i \cdot (-\pi + \Delta\phi B)}$$
$$= (1/2) \times e^{i \cdot (\Delta\phi A)} \times \{1 + e^{i \cdot (-\pi + \Delta\phi B - \Delta\phi A)}\}$$

Since $\Delta\phi_B - \Delta\phi_A = \pi$, as described above,

$$W_{A3} = (1/2)\times e^{i\cdot(\Delta\phi A)}\times\{1 + e^{i\cdot(-\pi + \pi)}\}$$

$$= e^{i\cdot(\Delta\phi A)}$$

Output Light Power at Position $A_3$:

$$P_{A3} = |W_{A3}|^2 = 1,$$

which means that the power of output light is 1.
Wave Complex Amplitude at Position $B_3$:

$$W_{B3} = (1/\sqrt{2})W_{B2} + (1/\sqrt{2})W_{A2}\times e^{i\cdot(-\pi/2)}$$

$$= (1/2)\times e^{i\{(-\pi/2) + \Delta\phi B\}} + (1/2)\times e^{i\{(-\pi/2) + \Delta\phi A\}}$$

$$= (1/2)\times e^{i\{(-\pi/2) + \Delta\phi A\}}\times(e^{i\cdot(-\pi + \Delta\phi B - \Delta\phi A)} + 1)$$

Since $\Delta\phi_B - \Delta\phi_A = \pi$, as described above,

$$W_{B3} = (1/2)\times e^{i\{(-\pi/2) + \Delta\phi A\}}\times(e^{i\pi} + 1)$$

$$= 0$$

Output Light Power at Position $B_3$:

$$P_{B3} = |W_{B3}|^2 = 0,$$

which means that the power of output light is 0 and no light is emitted at position $B_3$.

When $\phi_A$ is the phase difference of light which passes through the optical waveguide arm a and $\phi_B$ is the phase difference of light which passes through the optical waveguide arm b, $\phi_A$ and $\phi_B$ are calculated as follows:

$$\phi_A = (2\pi L/\lambda)N_A \tag{3-A}$$

where L is the physical length of a portion of the optical waveguide arm a which is covered by the thin-film heater 15 and $N_A$ is the refractive index of the optical waveguide A.

$$\phi_B = (2\pi L/\lambda)N_B \tag{3-B}$$

where L is the physical length of a portion of the optical waveguide arm b which is covered by the thin-film heater 15 and $N_B$ is the refractive index of the optical waveguide B.
In addition, $\Delta\phi_A$ and $\Delta\phi_B$ are calculated as follows:

$$\Delta\phi_A = (2\pi L/\lambda)(\partial N/\partial T)_A \Delta T \tag{3-1}$$

where L is the physical length of a portion of the optical waveguide arm a which is covered by the thin-film heater 15,

$\lambda$ is the wavelength of incident light, and $\Delta T$ is the temperature change.

$$\Delta\phi_B = (2\pi L/\lambda)(\partial N/\partial T)_B \Delta T \qquad (3\text{-}2)$$

where L is the physical length of a portion of the optical waveguide arm b which is covered by the thin-film heater 15, $\lambda$ is the wavelength of incident light, and $\Delta T$ is the temperature change.

In addition, $\Delta\phi_{A,B}$ is calculated as follows:

$$\Delta\phi_{A,B} = (2\pi/\lambda)\{(\partial/\partial T)(LN_B) - (\partial/\partial T)(LN_A)\}\Delta T$$

$$= (2\pi/\lambda)\{(\partial L/\partial T)N_B + L(\partial N_B/\partial T) - (\partial L/\partial T)N_A$$

$$+ L|\partial N_A/\partial T|\}\Delta T$$

$$= (2\pi/\lambda)[L\{|\partial N_A/\partial T| + (\partial N_B/\partial T)\} + (N_B - N_A)(\partial L/\partial T)]\Delta T$$

$$\approx (2\pi/\lambda)[L\{|\partial N_A/\partial T| + (\partial N_B/\partial T)\}] \qquad \dots (3\text{-}C)$$

In the MZI optical switch according to the present embodiment, the refractive index temperature coefficients of the two optical waveguides A and B have opposite signs. Therefore, the difference between the optical path lengths of the two optical waveguide arms and the phase shift of the transmitted light obtained when the optical waveguide arms are heated are larger than those obtained in the known MZI optical switch, which includes two optical waveguides composed of the same material (in other words, two optical waveguides whose refractive index temperature coefficients are the same), if the same temperature change is caused.

In addition, in the MZI optical switch according to the present embodiment, the phase of the transmitted light can be shifted by the amount required to achieve switching at a lower temperature compared to the known MZI optical switch in which the two optical waveguides are composed of the same material. Thus, the power consumption and the time required to increase the temperature are reduced, and the switching time is reduced accordingly.

In the known MZI optical switch in which the two optical waveguides are composed of the same material, if the phase of the transmitted light must be shifted by $\pi$ to achieve switching, the temperature change $(\Delta T)_\pi$ required for shifting the phase by $\pi$ is calculated as follows:

$$(\Delta T)_\pi = \lambda/[2L(\partial N/\partial T)] \qquad (4)$$

where L is the physical length of portions of the optical waveguide arms which are covered by the thin-film heater 15, and $\lambda$ is the wavelength of incident light. In the known MZI optical switch, the physical lengths of the optical waveguide arms and the refractive indices satisfy $L_A = L_B = L$ and $N_A = N_B$.

In comparison, in the MZI optical switch according to the present embodiment, if the phase of the transmitted light must be shifted by n to achieve switching, the temperature change $(\Delta T)_\pi$ required for shifting the phase by $\pi$ ($\Delta\phi_B - \Delta\phi_A = \pi$) is calculated as follows:

$$(\Delta T)_\pi = \lambda/[2L\{(\partial N/\partial T)_B + |(\partial N/\partial T)_A|\}] \qquad (5)$$

where L is the physical length of portions of the optical waveguide arms a and b which are covered by the thin-film heater 15, and $\lambda$ is the wavelength of incident light.

The denominator of the right side of Equation (5) is larger than that of the right side of Equation (4), and therefore $(\Delta T)_\pi$ of the MZI optical switch according to the present embodiment is smaller than that of the known MZI optical switch.

In the MZI optical switch according to the present embodiment, both of the two optical waveguide arms a and b are heated. Accordingly, compared to the case in which only one of the optical waveguide arms a and b is heated, the difference between the optical path lengths of the two optical waveguide arms a and b increases, and the phase shift of the transmitted light increases accordingly. Therefore, compared to the case in which only one of the optical waveguide arms a and b is heated, the phase of the transmitted light can be shifted by the amount required to achieve switching at a lower temperature. As a result, the required temperature increase can be achieved in a shorter time and the switching time is reduced.

In addition, since both of the two optical waveguide arms a and b are heated in the MZI optical switch according to the present embodiment, it is not necessary to provide a thermal insulator between the two optical waveguide arms a and b, and the structure and the manufacturing processes are simple. In addition, the two optical waveguide arms a and b can be arranged near each other, and therefore the bending angle can be reduced. Accordingly, the optical loss and the size of the MZI optical switch can be reduced.

In addition, in the MZI optical switch according to the present embodiment, the two optical waveguides A and B are simply composed of materials whose refractive index temperature coefficients have opposite signs. Accordingly, compared to the known MZI optical switch in which the grooves filed with an organic material are formed along the optical waveguide arms, the structure and the manufacturing processes are simpler.

In the above-described embodiment, the thin-film heater 15 heats both of the optical waveguide arms a and b. However, a thin-film heater which heats only one of the two optical waveguide arms may also be provided in place of the thin-film heater 15. For example, a thin-film heater which heats only the optical waveguide arm a (hereinafter called a thin-film heater according to a modification) may also be provided. In such a case, the thin-film heater according to the modification is provided above the optical waveguide arm a with the upper clad layer 3b interposed therebetween, and no thin-film heater is provided above the optical waveguide arm b.

An MZI optical switch which is similar to the MZI optical switch of the first embodiment except for having the thin-film heater according to the modification will be described below with reference to Fig. 1.

When no voltage is applied to the thin-film heater according to the modification, the MZI optical switch functions similarly to the MZI optical switch according to the first embodiment. Accordingly, when, for example, light R with a wavelength of 1.55 $\mu$m is input to the first input port 22a, it is output from the second output port 22d.

When a voltage is applied to the thin-film heater according to the modification, the optical waveguide arm a is heated and the temperature thereof increases. At this time, since the refractive index temperature coefficients of the two optical waveguide arms a and b have opposite signs as described above, the difference between the optical path lengths of the two optical waveguide arms a and b is larger than that in the known MZI optical switch in which the optical waveguides are composed of the same material (not as large as that in the case in which both of the optical waveguide arms a and b are heated), and the phase of the transmitted light can be shifted by $\pi$ at a lower temperature. Accordingly, if, for example, light R with a wavelength of 1.55 $\mu$m is input to the first input port 22a, it is output from the first output port 22c.

The powers $P_{A0}$ to $P_{A3}$ and $P_{B0}$ to $P_{B3}$ and the wave complex amplitudes $W_{A0}$ to $W_{A3}$ and $W_{B0}$ to $W_{B3}$ of the light R at positions $A_0$ to $A_3$ and $B_0$ to $B_3$, respectively, are shown below. The normal transmission phase shift is not included in the calculations. In this case, the coupling ratios of the 3-dB directional couplers 13a and 13b are both 0.5.

In this example, the case in which the optical waveguide arm a is heated until $\Delta\phi_A = -\pi$ ($\Delta\phi_A$ is the phase difference of light which passes through the optical waveguide arm a being heated) is satisfied is considered. In addition, $\Delta\phi_A < 0$ is satisfied.

Wave Complex Amplitude at Position $A_0$:

$$W_{A0} = 1.0 \times e^{i \cdot \theta} = 1$$

Incident Light Power at Position $A_0$:

$$P_{A0} = |W_{A0}|^2 = 1$$

Wave Complex Amplitude at Position $B_0$:

$$W_{B0} = 0,$$

which means no light enters.

Incident Light Power at Position $B_0$:

$$P_{B0} = |W_{B0}|^2 = 0$$

Wave Complex Amplitude at Position $A_1$:

$$W_{A1} = (1/\sqrt{2})W_{A0} = (1/\sqrt{2})$$

Transmitted Light Power at Position $A_1$:

$$P_{A1} = |W_{A1}|^2 = 1/2$$

(when 3-dB couplers are used)
Wave Complex Amplitude at Position $B_1$:

$$W_{B1} = (1/\sqrt{2})W_{A0} \times e^{i \cdot (-\pi/2)} = (1/\sqrt{2}) \times e^{i \cdot (-\pi/2)}$$

Transmitted Light Power at Position $B_1$:

$$P_{B1} = |W_{B1}|^2 = 1/2$$

Wave Complex Amplitude at Position $A_2$:

$$W_{A2} = W_{A1} \times e^{i \cdot (\Delta\phi A)} = (1/\sqrt{2}) \times e^{i \cdot (\Delta\phi A)}$$

Transmitted Light Power at Position $A_2$:

$$P_{A2} = |W_{A2}|^2 = 1/2$$

Wave Complex Amplitude at Position $B_2$:

$$W_{B2} = W_{B1} \times e^{i \cdot (\Delta\phi B)}$$

Since $\Delta\phi_B = 0$,

$$W_{B2} = W_{B1} = (1/\sqrt{2}) \times e^{i \cdot (-\pi/2)}$$

Transmitted Light Power at Position $B_2$:

$$P_{B2} = |W_{B2}|^2 = 1/2$$

Wave Complex Amplitude at Position $A_3$:

$$\mathbf{W_{A3}} = (1/\sqrt{2})\mathbf{W_{A2}} + (1/\sqrt{2})\mathbf{W_{B2}} \times e^{i \cdot (-\pi/2)}$$

$$= (1/2) \times e^{i \cdot (\Delta\phi A)} + (1/2) \times e^{i \cdot (-\pi)}$$

Since $\Delta\phi_A = -\pi$, as described above,

$$W_{A3} = (1/2) \times e^{i \cdot \pi} + (1/2) \times e^{i \cdot (-\pi)} = -1$$

Output Light Power at Position $A_3$:

$$P_{A3} = |W_{A3}|^2 = 1,$$

which means that the power of output light is 1.
Wave Complex Amplitude at Position $B_3$:

$$W_{B3} = (1/\sqrt{2})W_{B2} + (1/\sqrt{2})W_{A2} \times e^{i \cdot (-\pi/2)}$$

$$= (1/2) \times e^{i \cdot (-\pi/2)} + (1/2) \times e^{i\{(-\pi/2) + \Delta\phi A\}}$$

$$= (1/2) \times e^{i \cdot (-\pi/2)} \times (1 + e^{i \cdot \Delta\phi A})$$

Since $\Delta\phi_A = -\pi$, as described above,

$$W_{B3} = (1/2) \times e^{i \cdot (-\pi/2)} \times (1 - 1) = 0$$

Output Light Power at Position $B_3$:

$$P_{B3} = |W_{B3}|^2 = 0,$$

which means that the power of output light is 0 and no light is emitted at position $B_3$.

(Second Embodiment)

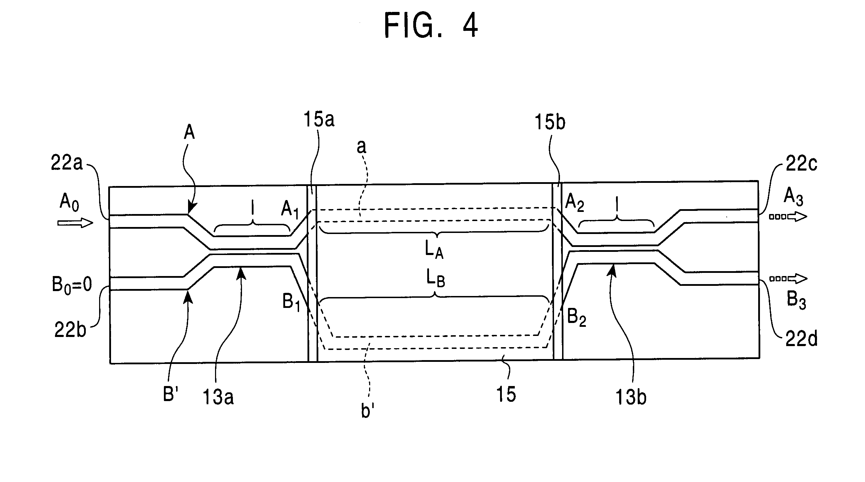

Fig. 4 is a schematic plan view showing the construction of an MZI optical switch according to a second embodiment of the present invention.

The MZI optical switch according to the second embodiment differs from the MZI optical switch according to the first embodiment shown in Figs. 1 to 3 in that the lengths of two optical waveguides A and B' are different from each other and are set such that the effective optical path lengths of the optical waveguides A and B' for incident light R with a predetermined wavelength are the same in the region between directional couplers 13a and 13b. More specifically, the physical length of an optical waveguide arm b' of the optical waveguide B' is longer than that of an optical waveguide arm a of the optical waveguide A such that the effective optical path lengths of the optical waveguides A and B' for the incident light R with the predetermined wavelength are the same in the region between the directional couplers 13a and 13b.

Also in the present embodiment, the optical waveguide A is composed of a material similar to that used in the first embodiment which has a negative refractive index temperature coefficient, and the optical waveguide B' is composed of a material similar to that used in the first embodiment which has a positive refractive index temperature coefficient.

The reason why the MZI optical switch is constructed as above will be described below.

In the MZI optical switch shown in Figs. 1 to 3, the refractive index temperature coefficients of the two optical waveguides A and B have opposite signs, and therefore there may be a case in which the transmission coefficients of the two optical waveguides A and B are different form each other by a large amount. In such a case, if the effective optical wavelengths of the optical waveguide arms a and b are different from each other, the signal light (incident light) cannot travel through the optical waveguide arms a and b in a similar manner and switching offset occurs.

In the MZI optical switch shown in Fig. 1, if the power of light input to the first input port 22a is 1, the energy output ratio at the first output port 22c is calculated as follows:

$$|W_{A3}/W_{A0}|^2 = \{\cos^2(ql) - \sin^2(ql)/q^2)(\delta^2 + \kappa^2\cos(\Delta\phi'))\}^2$$

$$+ (\sin^2(ql)/q^2)(2\delta\cos(ql)$$

$$- (\kappa^2/q)\sin(ql)\sin(\Delta\phi'))^2 \tag{6}$$

where $W_{A0}$ is the incident amplitude of the light at the first input port 22a, $W_{A3}$ is the output amplitude of the light at the first output port 22c, q is the effective coupling coefficient, 1 is the coupling length of the 3-dB directional couplers 13a and 13b, $\Delta\phi'$ is the effective phase change, $\kappa$ is the coupling coefficient, and $\delta$ is one-half of the difference between the transmission coefficients of the two optical waveguides.

If the power of light input to the first input port 22a is 1 and the sum of the energy output ratio at the first output port 22c and that at the second output port 22d is 1, the energy output ratio at the second output port 22d is calculated as follows:

$$|W_{B3}/W_{A0}|^2 = 1 - |W_{A3}/W_{A0}|^2 \tag{7}$$

where $W_{B3}$ is the output amplitude at the second output port 22d.

In addition, $\delta$ is calculated as follows:

$$\delta = (\beta_B - \beta_A)/2 \tag{8}$$

where $\beta_A$ is the transmission coefficient of the optical waveguide A and $\beta_B$ is the transmission coefficient of the optical waveguide B.

If the transmission coefficients of the optical waveguides A and B are different as above, the actual coupling coefficient (effective coupling coefficient) q is different from the coupling coefficient $\kappa$, and therefore the actual phase change (effective phase change) $\Delta\phi'$ obtained when the optical waveguide arms a and b are heated is also different from $\Delta\phi$.

The effective coupling coefficient q can be obtained as follows:

$$q^2 = \kappa^2 + \delta^2 \tag{9}$$

and the effective phase change $\Delta\phi'$ can be obtained as follows:

$$\Delta\phi' = \Delta\phi - 2\delta(L - 1) \tag{10}$$

where $\Delta\phi$ is the phase difference obtained when the optical waveguides A and B are composed of the same material, L is the physical length of portions of the optical waveguide arms which are covered by the thin-film heater 15, and 1 is the coupling length of the 3-dB directional couplers 13a and 13b.

In the present embodiment, the physical length of the optical waveguide arm b' of the optical waveguide B' is set longer than that of the optical waveguide arm a of the optical waveguide A such that the effective optical path lengths of the optical waveguides A and B' for the incident light R with the predetermined wavelength are the same in the region between the directional couplers 13a and 13b. The relationship between the physical lengths of the optical waveguide arms a and b' is expressed as follows:

$$L_B = L_A + \Delta L \tag{11}$$

where $L_A$ is the physical length of a portion of the optical waveguide arm a which is covered by the thin-film heater 15, $L_B$ is the physical length of a portion of the optical waveguide arm b' which is covered by the thin-film heater 15, and $\Delta L$ is the difference between $L_B$ and $L_A$.

The switching offset can be prevented by adjusting $\Delta L$ as follows:

$$\Delta L = (1 - \beta_A/\beta_B)(L_A - 1 + c/(2\kappa)) \tag{12}$$

Since Equation (11) is satisfied, Equation (10) is rewritten as follows:

$$\Delta\phi' = \Delta\phi - 2\delta(L_A - 1) + \beta_B \cdot \Delta L \qquad\qquad (10\text{-}2)$$

where 1 is the coupling length of the 3-dB directional couplers 13a and 13b. Accordingly, the following equation is obtained from Equations (10-2) and (12):

$$\Delta\phi' = \Delta\phi + c(\delta/\kappa) \qquad\qquad (13)$$

where c is the fitting parameter, and is determined as $c \approx 1.5$ when the offset is zero by numerical calculation (when $\delta/\kappa = 0.5$).

Since the transmission coefficient $\beta_A$ and $\beta_B$ are different from each other unlike normal optical waveguides, a phase difference occurs even when the physical lengths are the same, and this leads to the offset. Accordingly, in order to prevent the offset, the physical lengths are adjusted as in Equation (12).

In the MZI optical switch according to the present embodiment, the physical length of the optical waveguide arm b' is set longer than that of the optical waveguide arm a in accordance with the difference between the transmission coefficients of the two optical waveguides A and B' such that the effective optical path lengths of the optical waveguides A and B' for the incident light R with the predetermined wavelength between are the same in the region between the directional couplers 13a and 13b. Accordingly, the switching offset can be prevented.

(Examples)

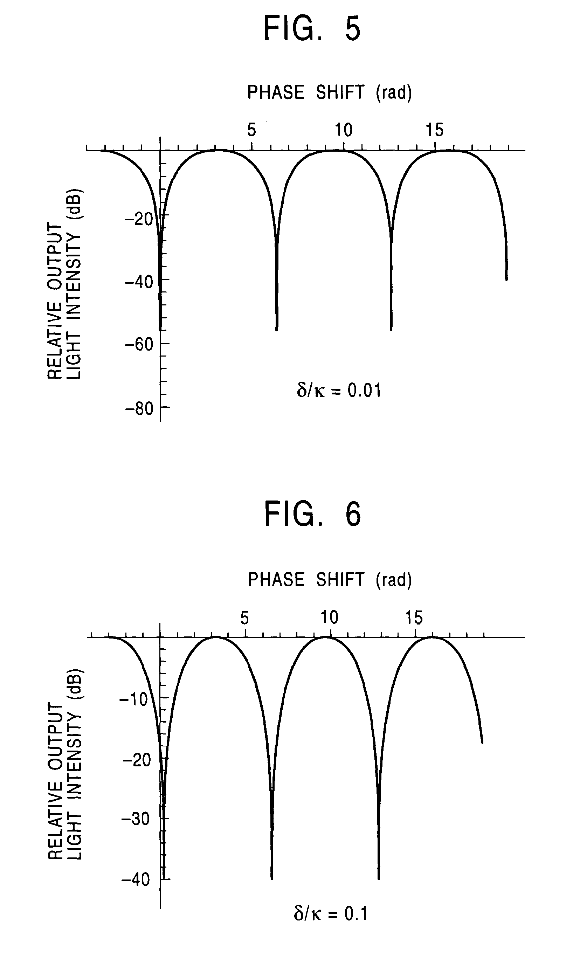

MZI optical switches having a construction similar to that of the MZI optical switch of the first embodiment shown in Figs. 1 and 3 were manufactured, and $\delta/\kappa$ of the manufactured MZI optical switches ranged from 0.01 to 0.5. The parameters of 3-dB directional couplers used in the MZI optical switches satisfied $ql = \pi/4$, where q is the effective coupling coefficient, 1 is the coupling length of the directional couplers, and $\pi$ is the phase shift. The extinction ratio of the manufactured MZI optical switches was determined by inputting light with a wavelength of 1.55 $\mu$m to the first input port 22a, measuring the power of light output from the first output port 22c, and converting the phase shift into an electrode voltage. The results are shown in Figs. 5 to 8.

Fig. 5 is a graph showing the relationship between the phase shift (rad) and the relative output light intensity (dB) in an MZI optical switch in which $\delta/\kappa = 0.01$.

Fig. 6 is a graph showing the relationship between the phase shift (rad) and the relative output light intensity (dB) in an MZI optical switch in which $\delta/\kappa = 0.1$.

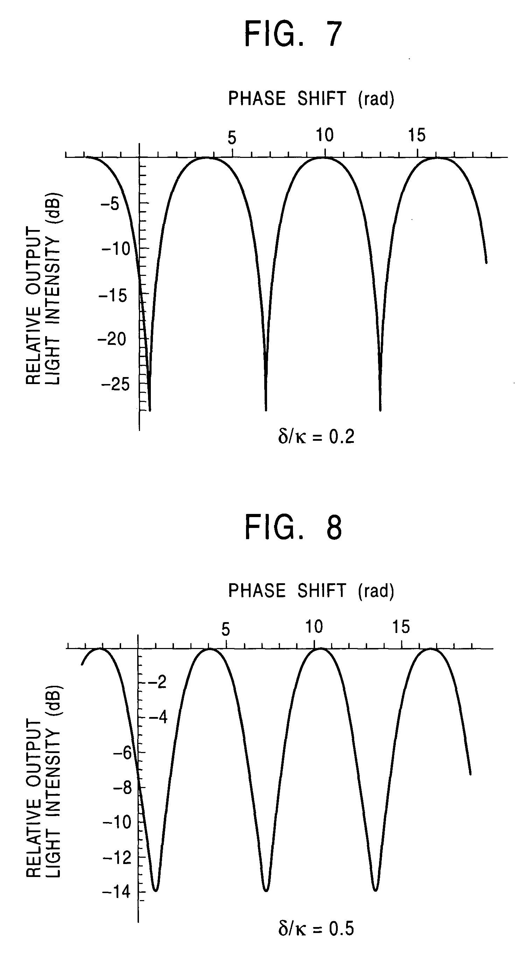

Fig. 7 is a graph showing the relationship between the phase shift (rad) and the relative output light intensity (dB) in an MZI optical switch in which $\delta/\kappa = 0.2$.

Fig. 8 is a graph showing the relationship between the phase shift (rad) and the relative output light intensity (dB) in an MZI optical switch in which $\delta/\kappa = 0.5$.

As is clear from Figs. 5 to 8, the extinction ratio of the MZI optical switch in which $\delta/\kappa = 0.5$ was only 14 dB, whereas the extinction ratios of the MZI optical switches in which $\delta/\kappa \leq 0.2$ were 28 dB or more. In particular, the extinction ratios of the MZI optical switches in which $\delta/\kappa \leq 0.1$ were 40 dB or more. Accordingly, $\delta/\kappa \leq 0.1$ is preferably satisfied for obtaining an extinction ratio of 30 dB or more, which is preferable in terms of practicability.

As described above, according to the MZI optical switch of the present invention, the refractive index temperature coefficients of the two optical waveguides have opposite signs. Thus, the present invention provides an MZI optical switch with a simple structure, low power consumption, and short switching time.

(Third Embodiment)

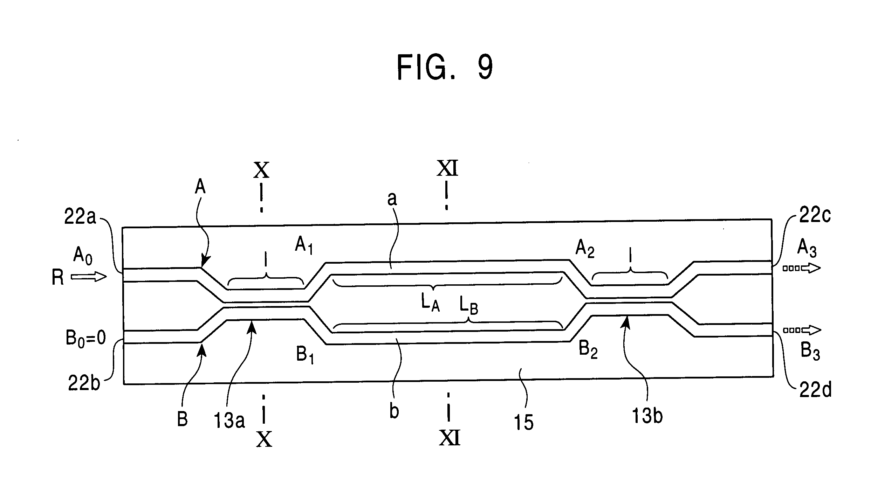

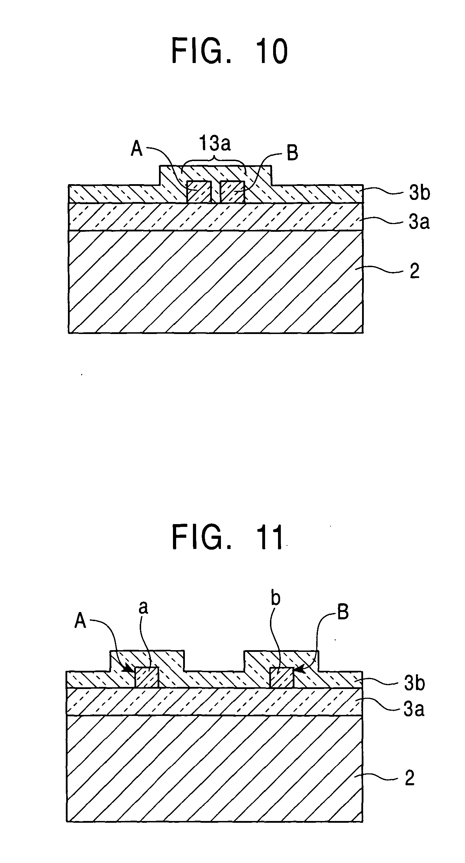

Fig. 9 is a schematic plan view showing the construction of an MZI temperature sensor according to a third embodiment of the present invention. In addition, Fig. 10 is a sectional view of Fig. 9 cut along line X-X, and Fig. 11 is a sectional view of Fig. 9 cut along line XI-XI.

As shown in Figs. 9 to 11, an MZI temperature sensor according to the present embodiment includes a lower clad layer 3a laminated on a substrate 2 composed of silicon or the like; two optical waveguides A and B formed on the surface of the lower clad layer 3a; and an upper clad layer 3b laminated so as to cover the two optical waveguides A and B and the lower clad layer 3a.

The lower and upper clad layers 3a and 3b are composed of, for example, $SiO_2$, and the refractive index of the material of the lower and upper clad layers 3a and 3b is lower than that of the material of the optical waveguides A and B. In addition, the absolute value of the refractive index temperature coefficient of the material of the lower and upper clad layers 3a and 3b is also lower than that of the material of the optical waveguides A and B.

The two optical waveguides A and B on the surface of the lower clad layer 3a are in the vicinity of each other at two locations so that two 3-dB directional couplers 13a and 13b are provided, and include their respective optical waveguide arms a and b which each is placed between the two 3-dB directional couplers 13a and 13b.

The refractive index temperature coefficients of the two optical waveguides A and B have opposite signs. In the present embodiment, the optical waveguide A is composed of a material which satisfies Expression (21) shown below, that is, a material having a negative refractive index temperature coefficient. For example, the optical waveguide A is composed of one of $TiO_2$, $PbMoO_4$, and $Ta_2O_5$.

In addition, the optical waveguide B is composed of a material which satisfies Expression (22) shown below, that is, a material having a positive refractive index temperature coefficient. For example, the optical waveguide B is composed of one of $LiNbO_3$, PLZT, and $SiO_xN_y$. The refractive index of $SiO_xN_y$ is about 1.48 to 1.9 (the refractive index increases as y increases (as the amount of N increases)).

For the above-described reasons, preferably, the optical waveguide A is composed of $TiO_2$ and the optical waveguide B is composed of PLZT.

$$(\partial N/\partial T)_A < 0 \tag{21}$$

$$(\partial N/\partial T)_B > 0 \tag{22}$$

where N is the refractive index of the optical waveguides A and B and T is the temperature ($^\circ$C).

In the above-mentioned materials of which the optical waveguides A and B may be composed, the refractive index temperature coefficient of $TiO_2$ is $-7 \times 10^{-5\circ}C^{-1}$, that of $PbMoO_4$ is $-4 \times 10^{-5\circ}$ $C^{-1}$, that of $Ta_2O_5$ is $-1 \times 10^{-5\circ}$ $C^{-1}$, that of $LiNbO_3$ is $4.0 \times 10^{-5\circ}$ $C^{-1}$, that of PLZT is $10 \times 10^{-5\circ}$ $C^{-1}$, and that of $SiO_xN_y$ is $1 \times 10^{-5\circ}$ $C^{-1}$.

The two optical waveguides A and B have the same physical length, and the two optical waveguide arms a and b also have the same physical length.

In the MZI temperature sensor according to the present embodiment, $\delta/\kappa \leq 0.2$ ($\delta$ is $(\beta_B-\beta_A)/2$ and $\kappa$ is the coupling coefficient, $\beta_A$ and $\beta_B$ being the transmission coefficients of the optical waveguides A and B, respectively) is preferably satisfied in view of increasing the extinction ratio and obtaining the output more accurately. In such a case, the temperature resolution can be increased when analog processing of the temperature change is performed. More preferably, $\delta/\kappa \leq 0.1$ is satisfied, and an extinction ratio of 30 dB or more can be obtained in such a case. The relationship defined by $\delta/\kappa \leq 0.2$ can be satisfied by reducing $\delta$ or increasing $\kappa$. $\delta$ can be reduced by changing the cross sectional shapes of the optical waveguides A and B, and $\kappa$ can be increased by reducing the distance between the optical waveguides A and B in the directional couplers 13a and 13b.

Light with a wavelength of, for example, 1.3 µm or 1.55 µm, is caused to enter the optical waveguides of the above-described MZI temperature sensor.

Next, the operation of the MZI temperature sensor according to the present embodiment will be described below with reference to Fig. 9. In Fig. 9, reference symbols $A_0$ to $A_3$ and $B_0$ to $B_3$ denote positions in the MZI temperature sensor.

More specifically, $A_0$ denotes a position of a first input port 22a provided on one end of the optical waveguide A (position at which light enters the optical waveguide A), $A_1$ denotes a position on the optical waveguide A immediately behind the 3-dB directional coupler 13a which is near the first input port 22a, $A_2$ denotes a position on the optical waveguide A immediately in front of the 3-dB directional coupler 13b which is near the other end of the optical waveguide A, and $A_3$ denotes a position of a first output port 22c provided on the other end of the optical waveguide A.

In addition, $B_0$ denotes a position of a second input port 22b provided on one end of the optical waveguide B (position at which light enters the optical waveguide B), $B_1$ denotes a position on the optical waveguide B immediately behind the 3-dB directional coupler 13a which is near the second input port 22b, $B_2$ denotes a position on the optical waveguide B immediately in front of the 3-dB directional coupler 13b which is near the other end of the optical waveguide B, and $B_3$ denotes a position of a second output port 22d provided on the other end of the optical waveguide B.

When, for example, light R with a wavelength of 1.55 µm is input to the first input port 22a while there is no temperature change (or before a temperature change occurs), it is output from the second output port 22d. The incident light powers, the output light powers, and the phase shifts (or the wave complex amplitudes) at positions $A_0$ to $A_3$ and $B_0$ to $B_3$ are shown below. In this case, the coupling ratios of the 3-dB directional couplers 13a and 13b are both 0.5.

Incident Light Power at Position $A_0$: 1
Wave Complex Amplitude at Position $A_1$: $(1/\sqrt{2}) \times e^{i \cdot 0}$

Wave Complex Amplitude at Position $A_2$: $(1/\sqrt{2})\times e^{i\cdot 0}$

Output Light Power at Position $A_3$: 0 (this is obtained from $(1/\sqrt{2})\times(1/\sqrt{2})\times e^{i\cdot 0} + (1/\sqrt{2})\times(1/\sqrt{2})\times e^{i\cdot(-\pi/2)} = 0$)

Incident Light Power at Position $B_0$: 0

Wave Complex Amplitude at Position $B_1$: $(1/\sqrt{2})\times e^{i\cdot(-\pi/2)}$

Wave Complex Amplitude at Position $B_2$: $(1/\sqrt{2})\times e^{i\cdot(-\pi/2)}$

Output Light Power at Position $B_3$: 1 (this is obtained from $|W_{B3}|^2 = 1$, which is derived from $(1/\sqrt{2})\times(1/\sqrt{2})\times e^{i\cdot(-\pi/2)} + (1/\sqrt{2})\times(1/\sqrt{2})\times e^{i\cdot(-\pi/2)}$)

When there is a temperature change, the temperature increases at both of the two optical waveguide arms a and b. At this time, since the refractive index temperature coefficients of the two optical waveguide arms a and b have opposite signs as described above, the difference between the optical path lengths of the two optical waveguide arms a and b is larger than that in the known MZI temperature sensor in which the optical waveguides are composed of the same material, and a phase shift of $\pi$, which is required for the temperature detection, can be obtained even when the temperature change is small (even when the temperature is low). Accordingly, if, for example, light R with a wavelength of 1.55 μm is input to the first input port 22a, it is output from the first output port 22c. The power of the output light varies periodically with respect to the temperature, and since the temperature and the output light power are in one-to-one correspondence in each period, the temperature can be determined on the basis of the light intensity.

The incident light powers, the output light powers, and the phase shifts (or the wave complex amplitudes) at positions $A_0$ to $A_3$ and $B_0$ to $B_3$ are shown below.

In this example, the case in which the temperature of the optical waveguide arms a and b is increased until $\Delta\phi_{A,B} = \Delta\phi_B - \Delta\phi_A = \pi$ ($\Delta\phi_A$ is the phase difference of light which passes through the optical waveguide arm a being heated and $\Delta\phi_B$ is the phase difference of light which passes through the optical waveguide arm b being heated) is satisfied is considered. In addition, $L_A = L_B = L$ ($L_A$ is the physical length of the optical waveguide arm a and $L_B$ is the physical length of the optical waveguide arm b), $NA \neq N_B$ ($N_A$ is the refractive index of the optical waveguide A and $N_B$ is the refractive index of the optical waveguide B), $\Delta\phi_A < 0$, and $\Delta\phi_B > 0$ are satisfied.

Incident Light Power at Position $A_0$: 1

Wave Complex Amplitude at Position $A_1$: $(1/\sqrt{2})\times e^{i\cdot 0}$

Wave Complex Amplitude at Position $A_2$: $(1/\sqrt{2})\times e^{i\cdot\Delta\phi A}$

Output Light Power at Position $A_3$: 1 (this is obtained from $|W_{A3}|^2 = 1$, which is derived by substituting $\Delta\phi_{A,B} = \Delta\phi_B - \Delta\phi_A = \pi$ into $(1/\sqrt{2})\times(1/\sqrt{2})\times e^{i\cdot\Delta\phi A} + (1/\sqrt{2})\times(1/\sqrt{2})\times e^{i\cdot(-\pi + \Delta\phi B)}$, where $\Delta\phi A$ means $\Delta\phi_A$ and $\Delta\phi B$ means $\Delta\phi_B$)

Incident Light Power at Position $B_0$: 0

Wave Complex Amplitude at Position $B_1$: $(1/\sqrt{2})x e^{i\cdot(-\pi/2)}$

Wave Complex Amplitude at Position $B_2$:

$$(1/\sqrt{2})\times e^{i\cdot((-\pi/2) + \Delta\phi B)}$$

Output Light Power at Position $B_3$: 0 (this is obtained from $|W_{B3}|^2 = 0$, which is derived by substituting $\Delta\phi_{A,B} = \Delta\phi_B - \Delta\phi_A = \pi$ into $(1/\sqrt{2})\times(1/\sqrt{2})\times e^{i\cdot(\Delta\phi A - \pi/2)} + (1/\sqrt{2})\times(1/\sqrt{2})\times e^{i\cdot((-\pi/2) + \Delta\phi B)}$, where $\Delta\phi A$ means $\Delta\phi_A$ and $\Delta\phi B$ means $\Delta\phi_B$)

When $\phi_A$ is the phase difference of light which passes through the optical waveguide arm a and $\phi_B$ is the phase difference of light which passes through the optical waveguide arm b, $\phi_A$ and $\phi_B$ are calculated as follows:

$\phi_A$ and $\phi_B$ are calculated as follows:

$$\phi_A = (2\pi L/\lambda)N_A \qquad\qquad (23\text{-A})$$

where L is the physical length of the optical waveguide arm a and $N_A$ is the refractive index of the optical waveguide A.

$$\phi_B = (2\pi L/\lambda)N_B \qquad\qquad (23\text{-B})$$

where L is the physical length the optical waveguide arm b and $N_B$ is the refractive index of the optical waveguide B.

In addition, $\Delta\phi_A$ and $\Delta\phi_B$ are calculated as follows:

$$\Delta\phi_A = (2\pi L/\lambda)(\partial N/\partial T)_A \Delta T \qquad (23\text{-}1)$$

where L is the physical length of the optical waveguide arm a, $\lambda$ is the wavelength of incident light, and $\Delta T$ is the temperature change.

$$\Delta\phi_B = (2\pi L/\lambda)(\partial N/\partial T)_B \Delta T \qquad (23\text{-}2)$$

where L is the physical length of the optical waveguide arm b, $\lambda$ is the wavelength of incident light, and $\Delta T$ is the temperature change.

In addition, $\Delta\phi_{A,B}$ is calculated as follows:

$$
\begin{aligned}
\Delta\phi_{A,B} &= (2\pi/\lambda)\{(\partial/\partial T)(LN_B) - (\partial/\partial T)(LN_A)\}\Delta T \\
&= (2\pi/\lambda)\{(\partial L/\partial T)N_B + L(\partial N_B/\partial T) - (\partial L/\partial T)N_A \\
&\quad + L|\partial N_A/\partial T|\}\Delta T \\
&= (2\pi/\lambda)[L\{|\partial N_A/\partial T| + (\partial N_B/\partial T)\} + (N_B - N_A)(\partial L/\partial T)]\Delta T \\
&\approx (2\pi/\lambda)[L\{|\partial N_A/\partial T| + (\partial N_B/\partial T)\}] \qquad \ldots (23\text{-}C)
\end{aligned}
$$

In the MZI temperature sensor according to the present embodiment, the refractive index temperature coefficients of the two optical waveguides A and B have opposite signs. Therefore, the difference between the effective optical path lengths of the two optical waveguide arms and the phase shift of the transmitted light obtained when a temperature change occurs are larger than those obtained in the known MZI temperature sensor, which includes two optical waveguides composed of the same material (in other words, two optical waveguides whose refractive index temperature coefficients are the same), if the difference between the physical lengths of the two optical wavelengths is the same.

In addition, in the MZI temperature sensor according to the present embodiment, the phase of the transmitted light can be shifted by the amount required to detect the temperature change even when the temperature change is small. Accordingly, the temperature sensitivity is higher than that of the known MZI temperature sensor in which the two optical waveguides are composed of the same material.

In the known MZI temperature sensor in which the two optical waveguides are composed of the same material, if the phase of the transmitted light must be shifted by $\pi$ to detect the temperature change, the temperature change $(\Delta T)_\pi$ required for shifting the phase by $\pi$ is calculated as follows:

$$(\Delta T)_\pi = \lambda/[2\{\Delta L(\partial N/\partial T) + N(\partial \Delta L/\partial T)\}] \qquad (24)$$

where L is the physical length of the optical waveguide arms and $\lambda$ is the wavelength of incident light. In the known MZI temperature sensor, the physical lengths of the optical waveguide arms and the refractive indices satisfy the following expressions:

$$L_A < L_B \, , \, L_B = L_A + \Delta L, \, N_A = N_B = N,$$

and

$$(\partial N/\partial T)_A = (\partial N/\partial T)_B = (\partial N/\partial T)$$

When, for example, the two optical waveguides included in the known MZI temperature sensor are composed of LiNbO$_3$ (the refractive index N = 2.2 and $(\partial N/\partial T) = 4\times10^{-5}$° C$^{-1}$) and when $\Delta L = 0.01$ cm, $L_A = 5$ cm, $\lambda = 0.633\ \mu$m,

and $(\partial \Delta L / \partial T) = 1.6 \times 10^{-5°}$ C$^{-1}$, $(\Delta T)_\pi = 42$ °C is obtained from Equation (24).

In comparison, in the MZI temperature sensor according to the present embodiment, if the phase of the transmitted light must be shifted by $\pi$ to detect the temperature change, the temperature change $(\Delta T)_\pi$ required for shifting the phase by $\pi$ is calculated as follows:

$$(\Delta T)_\pi = \lambda / [2L\{(\partial N / \partial T)_B + |(\partial N / \partial T)_A|\}] \tag{25}$$

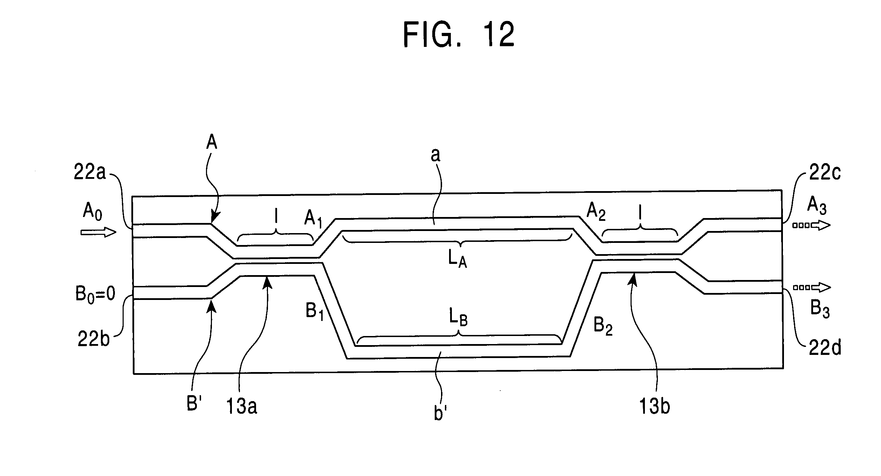

where L is the physical length of the optical waveguide arms and $\lambda$ is the wavelength of incident light. Equation (25) corresponds to the case in which $L_A = L_B$ is satisfied, as shown in Fig. 9. The case in which $L_A < L_B$ is satisfied, as shown in Fig. 12, will be describe below in the fourth embodiment.

The denominator of the right side of Equation (25) is larger than that of the right side of Equation (24), and therefore $(\Delta T)_\pi$ of the MZI temperature sensor according to the present embodiment is smaller than that of the known MZI temperature sensor.

When, for example, the optical waveguides A and B included in the MZI temperature sensor according to the present embodiment is composed of TiO$_2$ (the refractive index is $N_A = 2.2$ and $(\partial N / \partial T)_A = -7 \times 10^{-5°}$C$^{-1}$) and SiO$_x$N$_y$ (the refractive index is $N_B = 1.48$ to $1.9$ and $(\partial N / \partial T)_B = 1 \times 10^{-5°}$ C$^{-1}$), respectively, and when L = 5 cm and $\lambda = 0.633$ $\mu$m, $(\Delta T)_\pi < 0.1$°C is obtained from Equation (25).

Accordingly, the MZI temperature sensor according to the present invention can detect the temperature change at a lower temperature compared to the known MZI temperature sensor.

In addition, in the MZI temperature sensor according to the present embodiment, the two optical waveguides A and B are simply composed of materials whose refractive index temperature coefficients have opposite signs. Therefore, the structure and the manufacturing processes are simple. Accordingly, the MZI temperature sensor according to the present embodiment is suitable for mass production.

In addition, in the MZI temperature sensor according to the present embodiment, the two optical waveguide arms may have the same physical length. Therefore, the two optical waveguide arms may be arranged nearer and the bending angle can be reduced. Accordingly, the optical loss can be reduced and the offset can be prevented. In addition, the size of the MZI temperature sensor can be reduced.

(Fourth Embodiment)

Fig. 12 is a schematic plan view showing the construction of an MZI temperature sensor according to a fourth embodiment of the present invention.

The MZI temperature sensor according to the fourth embodiment differs from the MZI temperature sensor according to the third embodiment shown in Figs. 9 to 11 in that the physical lengths of two optical waveguides A and B' are different from each other. More specifically, the physical length of an optical waveguide arm b' of the optical waveguide B' is longer than that of an optical waveguide arm a of the optical waveguide A.

Also in the present embodiment, the optical waveguide A is composed of a material similar to that used in the third embodiment which has a negative refractive index temperature coefficient, and the optical waveguide B' is composed of a material similar to that used in the third embodiment which has a positive refractive index temperature coefficient.

The relationship between the physical length of the optical waveguide arm a and that of the optical waveguide arm b' is expressed as follows:

$$L_B = L_A + \Delta L \tag{26}$$

where $L_A$ is the physical length of the optical waveguide arm a, $L_B$ is the physical length of the optical waveguide arm b', and $\Delta L$ is the difference between $L_B$ and $L_A$.

In the present embodiment, $\Delta \phi_{A,B}$ is calculated as follows:

$$\Delta\phi_{A,B} = (2\pi/\lambda)\{(\partial/\partial T)(L_B N_B) - (\partial/\partial T)(L_A N_A)\}\Delta T$$

$$= (2\pi/\lambda)\{(\partial L_B/\partial T)N_B + L_B(\partial N_B/\partial T)$$

$$- (\partial L_A/\partial T)N_A + L_A|\partial N_A/\partial T|\}\Delta T$$

$$= (2\pi/\lambda)[\{L_B(\partial N_B/\partial T) + L_A|\partial N_A/\partial T|\}$$

$$+ \{N_B(\partial L_B/\partial T) - N_A(\partial L_A/\partial T)]\Delta T \quad \ldots (23-D)$$

In the MZI temperature sensor according to the present embodiment, if the phase of the transmitted light must be shifted by $\pi$ to detect the temperature change, the temperature change $(\Delta T)_\pi$ required for shifting the phase by $\pi$ is calculated as follows:

$$(\Delta T)_\pi = \lambda/[2\{L_B(\partial N/\partial T)_B + L_A|(\partial N/\partial T)_A|$$

$$+ [N_B(\partial L_B/\partial T) - N_A(\partial L_A/\partial T)]\}] \qquad (27)$$

where $L_A$ is the physical length of the optical waveguide arm a, $L_B$ is the physical length of the optical waveguide arm b', and $\lambda$ is the wavelength of incident light.

The denominator of the right side of Equation (27) is larger than that of the right side of Equation (24), and therefore $(\Delta T)_\pi$ of the MZI temperature sensor according to the present embodiment is smaller than that of the known MZI temperature sensor.

When, for example, the optical waveguide A and B included in the MZI temperature sensor according to the present embodiment is composed of $TiO_2$ (the refractive index is $N_A = 2.2$ and $(\partial N/\partial T)_A = -7\times10^{-5}°C^{-1}$) and $SiO_xN_y$ (the refractive index is $N_B = 1.48$ to 1.9 and $(\partial N/\partial T)_B = 1\times10^{-5}$ $C^{-1}$), respectively, and when $L_A = 5$ cm, $L_B = 5.01$ cm, $\Delta L = 0.01$ cm, and $\lambda = 0.633$ $\mu$m, $(\Delta T)_\pi < 0.1°C$ is obtained from Equation (27)

(Examples)

MZI temperature sensors having a construction similar to that of the MZI temperature sensor of the third embodiment shown in Figs. 9 and 11 were manufactured, and $\delta/\kappa$ of the manufactured MZI temperature sensors ranged from 0.01 to 0.5. The parameters of 3-dB directional couplers used in the MZI temperature sensors satisfied ql = $\pi/4$, where q is the effective coupling coefficient, l is the coupling length of the directional couplers, and $\pi$ is the phase shift. The extinction ratio of the manufactured MZI temperature sensors was determined by inputting light with a wavelength of 1.55 $\mu$m to the first input port 22a, measuring the power of light output from the first output port 22c, and converting the phase shift into an electrode voltage.

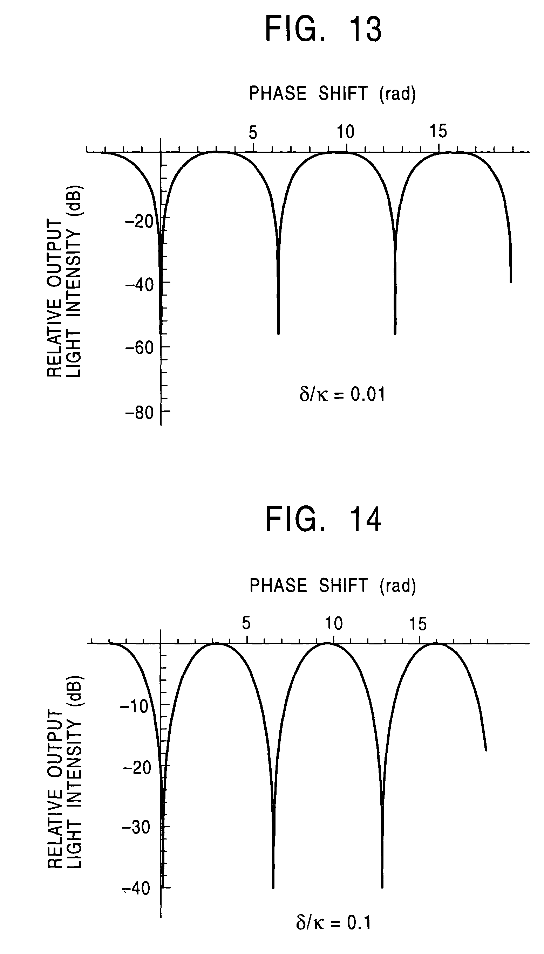

The results are shown in Figs. 13 to 16.

Fig. 13 is a graph showing the relationship between the phase shift (rad) and the relative output light intensity (dB) in an MZI temperature sensor in which $\delta/\kappa = 0.01$.

Fig. 14 is a graph showing the relationship between the phase shift (rad) and the relative output light intensity (dB) in an MZI temperature sensor in which $\delta/\kappa = 0.1$.

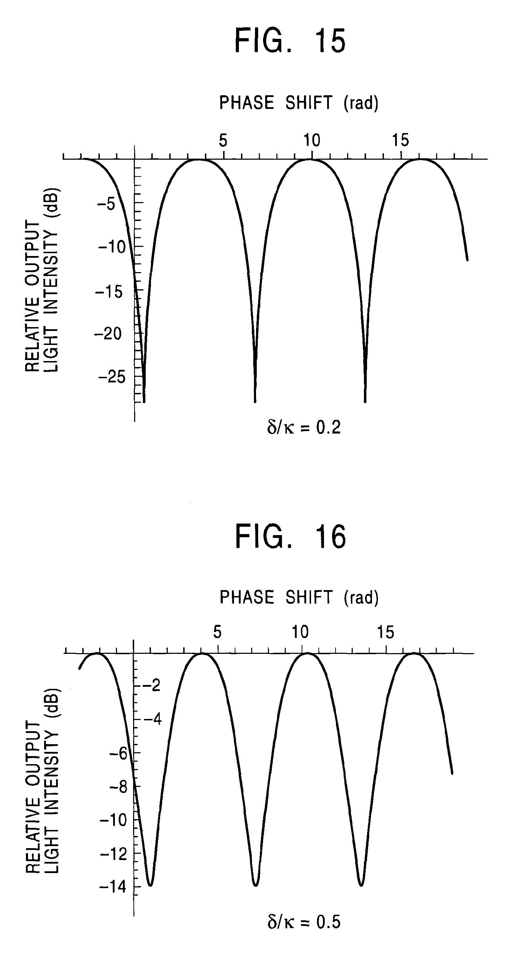

Fig. 15 is a graph showing the relationship between the phase shift (rad) and the relative output light intensity (dB) in an MZI temperature sensor in which $\delta/\kappa = 0.2$.

Fig. 16 is a graph showing the relationship between the phase shift (rad) and the relative output light intensity (dB) in an MZI temperature sensor in which $\delta/\kappa = 0.5$.

As is clear from Figs. 13 to 16, the extinction ratio of the MZI temperature sensor in which $\delta/\kappa = 0.5$ was only 14 dB, whereas the extinction ratios of the MZI temperature sensors in which $\delta/\kappa \leq 0.2$ were 28 dB or more. In particular, the extinction ratios of the MZI temperature sensors in which $\delta/\kappa \leq 0.1$ were 40 dB or more. Accordingly, $\delta/\kappa \leq 0.1$ is preferably satisfied for obtaining an extinction ratio of 30 dB or more, which is preferable in terms of practicability.

As described above, according to the MZI temperature sensor of the present invention, the refractive index temperature coefficients of the two optical waveguides have opposite signs. Thus, the present invention provides a high-sensitivity MZI temperature sensor.

**Claims**

1. A Mach-Zehnder interferometer optical switch comprising:

   two optical waveguides having refractive index temperature coefficients with opposite signs, the two optical waveguides being in the vicinity of each other at two locations such that two directional couplers are provided at the two locations and including respective optical waveguide arms between the two directional couplers; and a heater which heats at least one of the two optical waveguide arms.

2. A Mach-Zehnder interferometer optical switch according to Claim 1, wherein the heater heats both of the two optical waveguide arms.

3. A Mach-Zehnder interferometer optical switch according to Claim 1, wherein one of the two optical waveguides comprises a first material selected from the group consisting of $TiO_2$, $PbMoO_4$, and $Ta_2O_5$, the first material having a negative refractive index temperature coefficient, and the other optical waveguide comprises a second material selected from the group consisting of $LiNbO_3$, lead lanthanum zirconate titanate, and $SiO_xN_y$, the second material having a positive refractive index temperature coefficient.

4. A Mach-Zehnder interferometer optical switch according to Claim 1, wherein $\delta/\kappa \leq 0.2$ is satisfied, where $\delta$ is one-half of the difference between the transmission coefficients of the two optical waveguides and $\kappa$ is the coupling coefficient.

5. A Mach-Zehnder interferometer optical switch according to Claim 1, wherein the physical lengths of the two optical waveguides are different from each other and are set such that the effective optical path lengths of the two optical waveguides for light with a predetermined wavelength are the same in the region between the directional couplers.

6. A Mach-Zehnder interferometer temperature sensor comprising:

   two optical waveguides having refractive index temperature coefficients with opposite signs, the two optical waveguides being in the vicinity of each other at two locations such that two directional couplers are provided at the two locations and including respective optical waveguide arms between the two directional couplers.

7. A Mach-Zehnder interferometer temperature sensor according to Claim 6, wherein the two optical waveguide arms have the same physical length.

8. A Mach-Zehnder interferometer temperature sensor according to Claim 6, wherein $\delta/\kappa \leq 0.2$ is satisfied, where $\delta$ is one-half of the difference between the transmission coefficients of the two optical waveguides and $\kappa$ is the coupling coefficient.

9. A Mach-Zehnder interferometer temperature sensor according to Claim 6, wherein one of the two optical waveguides comprises a first material selected from the group consisting of $TiO_2$, $PbMoO_4$, and $Ta_2O_5$, the first material having a negative refractive index temperature coefficient, and the other optical waveguide comprises a second material selected from the group consisting of $LiNbO_3$, lead lanthanum zirconate titanate, and $SiO_xN_y$, the second material having a positive refractive index temperature coefficient.

FIG. 1

# FIG. 2

A    13a    B

3b

3a

2

# FIG. 3

A    a    15    b    B

3b

3a

2

FIG. 4

EP 1 469 292 A1

# FIG. 5

PHASE SHIFT (rad)

$\delta/\kappa = 0.01$

# FIG. 6

PHASE SHIFT (rad)

$\delta/\kappa = 0.1$

# FIG. 7

PHASE SHIFT (rad)

$\delta/\kappa = 0.2$

# FIG. 8

PHASE SHIFT (rad)

$\delta/\kappa = 0.5$

# FIG. 9

EP 1 469 292 A1

# FIG. 10

A   13a   B

3b
3a
2

# FIG. 11

A   a   b   B

3b
3a
2

# FIG. 12

# FIG. 13

PHASE SHIFT (rad)

$\delta/\kappa = 0.01$

# FIG. 14

PHASE SHIFT (rad)

$\delta/\kappa = 0.1$

# FIG. 15

PHASE SHIFT (rad)

$\delta/\kappa = 0.2$

# FIG. 16

PHASE SHIFT (rad)

$\delta/\kappa = 0.5$

FIG. 17
PRIOR ART

EP 1 469 292 A1

# FIG. 18
## PRIOR ART

# FIG. 19
## PRIOR ART

**European Patent Office**

**EUROPEAN SEARCH REPORT**

Application Number

EP 04 25 1619

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br>A | US 6 311 004 B1 (LOVE JOHN  ET AL)<br>30 October 2001 (2001-10-30)<br>* abstract; figures 13,2-5 *<br>* column 6, line 1 *<br>* column 7, lines 3-7 *<br>* column 10, lines 63-65 *<br>* column 12, line 35 *<br>* column 14, lines 7-46 *<br>* column 16, lines 10-14 *<br>----- | 1,2,4,<br>6-8<br><br>3,5,9 | G01K11/00<br>G02F1/01<br>G02B6/35 |
| X<br>A | EP 0 980 018 A (LUCENT TECHNOLOGIES INC)<br>16 February 2000 (2000-02-16)<br>* abstract; figures 2,3,8 *<br>* paragraphs [0011], [0015], [0018],<br>[0023] *<br>----- | 1,2,4-6,<br>8<br>7 | |
| A | PATENT ABSTRACTS OF JAPAN<br>vol. 2000, no. 04,<br>31 August 2000 (2000-08-31)<br>-& JP 2000 029079 A (NIPPON TELEGR &<br>TELEPH CORP <NTT>),<br>28 January 2000 (2000-01-28)<br>* abstract; figures 2,4,6 *<br>* paragraphs [0008], [0016], [0018] *<br>----- | 1,2,4-8 | |
| A | U. GRUSEMANN, B. ZEITNER ET AL.:<br>"Integrated optical wavelength sensor with<br>self-compensation of thermally induced<br>phase shifts by use of a LiNbO3 unbalanced<br>Mach-Zehnder interferometer"<br>APPLIED OPTICS,<br>vol. 41, no. 29,<br>10 October 2002 (2002-10-10), pages<br>6211-6219, XP002290429<br>* page 6212, left-hand column, lines 1-10<br>*<br>* abstract; figure 1 *<br>----- | 5 | TECHNICAL FIELDS<br>SEARCHED (Int.Cl.7)<br><br>G02F<br>G01F<br>G01K<br>G02B |

The present search report has been drawn up for all claims

| Place of search | Date of completion of the search | Examiner |
|---|---|---|
| Munich | 29 July 2004 | Elflein, W |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                    EP 04 25 1619

This annex lists the patent family members relating to the patent documents cited in the above-mentioned European search report.
The members are as contained in the European Patent Office EDP file on
The European Patent Office is in no way liable for these particulars which are merely given for the purpose of information.

29-07-2004

| Patent document cited in search report | | Publication date | Patent family member(s) | | Publication date |
|---|---|---|---|---|---|
| US 6311004 | B1 | 30-10-2001 | AU | 2843100 A | 29-05-2000 |
| | | | CA | 2346130 A1 | 18-05-2000 |
| | | | EP | 1129385 A2 | 05-09-2001 |
| | | | JP | 2002529782 T | 10-09-2002 |
| | | | WO | 0028355 A2 | 18-05-2000 |
| EP 0980018 | A | 16-02-2000 | US | 6240226 B1 | 29-05-2001 |
| | | | EP | 0980018 A2 | 16-02-2000 |
| | | | JP | 2000066252 A | 03-03-2000 |
| JP 2000029079 | A | 28-01-2000 | NONE | | |

EPO FORM P0459

For more details about this annex : see Official Journal of the European Patent Office, No. 12/82